# EUROPEAN PATENT APPLICATION

(11) **EP 4 832 186 A1**
(43) Date of publication of application: **28.10.2026**
(21) Application number: 24907257.0
(22) Date of filing: 10.12.2024
(51) Int. Cl.: H01M 50/204, H01M 50/209, H01M 50/213, H01M 50/296, H01M 50/50

(54) **BATTERY PACK**

(30) Priority: 21.12.2023 JP 2023216280
(71) Applicant: Panasonic Intellectual Property Management Co., Ltd., Kadoma-shi, Osaka 571-0057 (JP)
(72) Inventor: UMABA, Motomitsu, kadoma-shi, Osaka 571-0057 (JP)
(74) Representative: Eisenführ Speiser
(86) International application number: PCT/JP2024/043701
(87) International publication number: WO 2025/134872

(57) **Abstract**

In a battery pack, an external output terminal exposed from an exterior case housing an assembled battery is fixed to an output bus bar. The external output terminal constituted by a clinching member, and the output bus bar has a connection opening into which a fixed end of the clinching member is press-fitted such that the clinching member is fixed upright. The exterior case includes a fixed portion having a terminal insertion opening, the external output terminal being fixed to the fixed portion, the clinching member passing through the terminal insertion opening, a chamfered portion is provided along at least one of an opening edge portion of the connection opening and an opening edge portion of the terminal insertion opening, which face each other, and an annular rubber-like elastic body is disposed. In a state in which the output bus bar fixed to the fixed portion, the rubber-like elastic body elastically deforms and seals between an outer peripheral surface of the clinching member and chamfered portion, such that the external output terminal is fixed to the exterior case in a waterproof structure.

## Description

### TECHNICAL FIELD

The present invention relates to a battery pack in which a large number of battery cells are incorporated in an exterior case, and particularly to a battery pack in which an external output terminal exposed from the exterior case is disposed in the exterior case with a waterproof structure.

### BACKGROUND ART

A battery pack in which a large number of chargeable and dischargeable battery cells are incorporated in an exterior case has been developed. Such a battery pack is used as a power source for an electric vehicle, or is used as a power source for an electric heavy machine, a forklift, or the like. In such a power supply device, in order to charge and discharge a built-in battery cell, there is a power supply device including an external output terminal for charge and discharge that is externally connected and exposed from the exterior case. For example, in the battery pack or the like used outdoors, a structure in which the external output terminal disposed in the exterior case is fixed to the exterior case in a waterproof structure in order to prevent rainwater from entering the battery pack is required.

### Citation List

### Patent Literature

PTL 1: Unexamined Japanese Patent Publication No. 2011-103259

### SUMMARY OF THE INVENTION

An object of the present invention is to provide a battery pack in which the external output terminal exposed from the exterior case can be fixed to the exterior case simply and easily with a waterproof structure while reducing manufacturing cost.

A battery pack according to an aspect of the present invention includes: an assembled battery including a plurality of battery cells; an exterior case housing the assembled battery; an external output terminal disposed to be exposed from the exterior case; and an output bus bar including a first end, to which the external output terminal is fixed, and a second end, to which an output terminal of the assembled battery is connected. The external output terminal is constituted by a clinching member having a cylindrical outer shape, and the output bus bar has a connection opening at the first end, into which a fixed end of the clinching member is press-fitted such that the clinching member is fixed upright, the fixed end of the clinching member being closed-ended. The exterior case includes a surface plate, a part of which is a fixed portion having a terminal insertion opening, the external output terminal being fixed to the fixed portion, the clinching member passing through the terminal insertion opening. A chamfered portion is provided along at least one of an opening edge portion of the connection opening and an opening edge portion of the terminal insertion opening, which face each other. An annular rubber-like elastic body, through which the clinching member is inserted, is further disposed at a boundary between the opening edge portion of the connection opening of the output bus bar and the clinching member, and in a state in which the clinching member is inserted into the terminal insertion opening and the output bus bar fixed to the fixed portion, the rubber-like elastic body elastically deforms and seals between the opening edge portion of the connection opening, the opening edge portion of the terminal insertion opening, and an outer peripheral surface of the clinching member, such that the external output terminal is fixed to the exterior case in a waterproof structure.

The battery pack of the present invention has an advantage that waterproof can be reliably ensured by fixing the output bus bar to which the clinching member is fixed to the exterior case while having a simple structure without performing special processing on the clinching member.

### BRIEF DESCRIPTION OF THE DRAWINGS

Fig. 1 is a perspective view of a battery pack according to an exemplary embodiment of the present invention.
Fig. 2 is an exploded perspective view of the battery pack illustrated in Fig. 1.
Fig. 3 is a rear perspective view of the battery pack illustrated in Fig. 2 as viewed from below.
Fig. 4 is an exploded perspective view of an assembled battery of the battery pack illustrated in Fig. 2.
Fig. 5 is a block diagram of the battery pack in Fig. 1.
Fig. 6 is a plan view of the battery pack illustrated in Fig. 1.
Fig. 7 is a sectional view taken along line VII-VII of a lid case of the battery pack illustrated in Fig. 6.
Fig. 8 is a sectional view taken along line VIII-VIII of the lid case of the battery pack illustrated in Fig. 6.
Fig. 9 is an exploded sectional view of the lid case and an output bus bar illustrated in Fig. 7.
Fig. 10 is a perspective view of the output bus bar to which a clinching member is fixed.
Fig. 11 is an enlarged sectional view illustrating a state in which an O-ring is disposed in the clinching member and the output bus bar.
Fig. 12 is an enlarged sectional view illustrating a state in which the clinching member, the output bus bar, and a fixed portion are waterproofed by the O-ring.
Fig. 13 is an exploded sectional view illustrating a state in which the clinching member is press-fitted into a connection opening of the output bus bar.
Fig. 14 is an enlarged sectional view illustrating another example of waterproofing the clinching member, the output bus bar, and the fixed portion with the O-ring.
Fig. 15 is an exploded sectional view of a waterproof structure illustrated in Fig. 14.
Fig. 16 is an enlarged sectional view illustrating another example of an external output terminal.
Fig. 17 is an enlarged sectional view illustrating an example of the waterproof structure of the external output terminal of the battery pack according to a comparative example.
Fig. 18 is an exploded sectional view of the waterproof structure illustrated in Fig. 17.

### DESCRIPTION OF EMBODIMENT

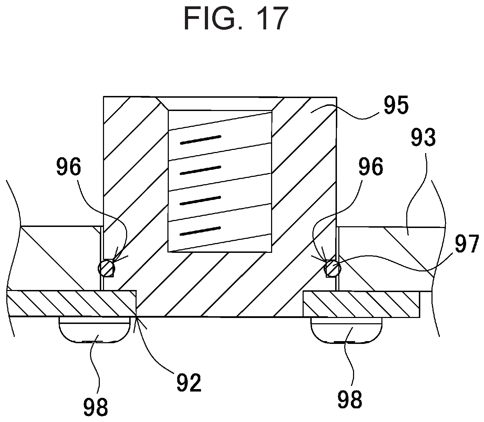

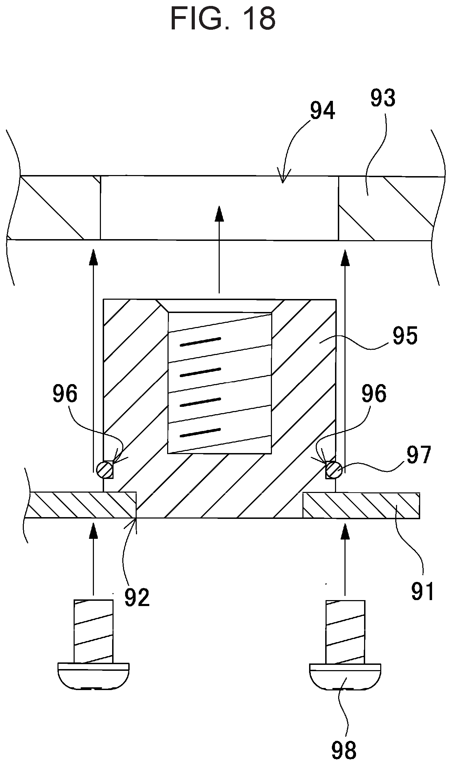

First, one attention point of the present invention will be described. In battery packs in which an assembled battery including a large number of battery cells is housed in an exterior case, there is a battery pack in which an external output terminal is fixed to the exterior case in a waterproof structure in order to dispose the external output terminal in a state of being exposed from the exterior case. As such a battery pack, a battery pack having a structure using a clinching nut for the external output terminal has been developed. Figs. 17 and 18 illustrate an example of the waterproof structure of the external output terminal in the battery pack.

In the waterproof structure illustrated in the drawings, clinching nut 95 is press-fitted and fixed to connection opening 92 provided in output bus bar 91, and through-hole 94 for guiding clinching nut 95 is provided to be opened in exterior case 93. In order to dispose clinching nut 95 in exterior case 93 with the waterproof structure, clinching nut 95 illustrated in the drawings is provided with ring-shaped outer peripheral groove 96 along an outer peripheral surface, and O-ring 97 is disposed in outer peripheral groove 96. O-ring 97 disposed on the outer peripheral surface of clinching nut 95 abuts on an opening end surface of through-hole 94 provided in exterior case 93 in a state where output bus bar 91 is fixed to an inner surface of exterior case 93, and elastically deforms to seal a contact portion with the opening end surface of through-hole 94, thereby realizing the waterproof structure.

In the above structure, since clinching nut 95 needs to be processed into a special shape, there is a problem that custom-made clinching nut 95 is required and manufacturing cost increases. In the structure illustrated in Figs. 17 and 18, since O-ring 97 is disposed in outer peripheral groove 96 provided on the outer peripheral surface of clinching nut 95, O-ring 97 cannot elastically deform while being strongly pressed toward the outer peripheral surface of clinching nut 95 and the opening end surface of through-hole 94 of exterior case 93, and there is a problem that sealing cannot be performed in a state where the O-ring is strongly brought into close contact. The present invention has been developed to solve such problems.

A battery pack according to an exemplary embodiment of the present invention includes: an assembled battery including a plurality of battery cells; an exterior case housing the assembled battery; an external output terminal disposed to be exposed from the exterior case; and an output bus bar including a first end, to which the external output terminal is fixed, and a second end, to which an output terminal of the assembled battery is connected. The external output terminal is constituted by a clinching member having a cylindrical outer shape, and the output bus bar has a connection opening at the first end, into which a fixed end of the clinching member is press-fitted such that the clinching member is fixed upright, the fixed end of the clinching member being closed-ended. The exterior case includes a surface plate, a part of which is a fixed portion having a terminal insertion opening, the external output terminal being fixed to the fixed portion, the clinching member passing through the terminal insertion opening. A chamfered portion is provided along at least one of an opening edge portion of the connection opening and an opening edge portion of the terminal insertion opening, which face each other. An annular rubber-like elastic body, through which the clinching member is inserted, is further disposed at a boundary between the opening edge portion of the connection opening of the output bus bar and the clinching member, and in a state in which the clinching member is inserted into the terminal insertion opening and the output bus bar fixed to the fixed portion, the rubber-like elastic body elastically deforms and seals between the opening edge portion of the connection opening, the opening edge portion of the terminal insertion opening, and an outer peripheral surface of the clinching member, such that the external output terminal is fixed to the exterior case in a waterproof structure.

According to the above configuration, there is an advantage that waterproof can be reliably ensured by fixing the output bus bar to which the clinching member is fixed to the exterior case by simple processing while using a general-purpose clinching member without performing special processing on the clinching member. In particular, according to the above structure, since the chamfered portion is provided at the opening edge in at least one of the opening edge portion of the connection opening of the output bus bar and the opening edge portion of the terminal insertion opening of the fixed portion, the sealing can be performed by the annular rubber-like elastic body sandwiched between the opening edge portion of the connection opening and the opening edge portion of the terminal insertion opening being positioned while being pressed against the outer peripheral surface of the clinching member along the chamfered portion. Therefore, according to the above configuration, there is an advantage that the waterproof structure can be reliably formed while reducing the manufacturing cost as a simple and simple structure.

In the battery pack according to another exemplary embodiment of the present invention, the clinching member is a bottomed nut including the fixed end that is closed-ended, and a female threaded portion of the bottomed nut serves as an external connection portion of the external output terminal.

According to the above configuration, since the clinching member is a bottomed blind type nut having the fixed end closed, and the female threaded portion of the nut serves as a female-type terminal as the external connection portion of the external output terminal, external connection can be simply and easily performed by connecting a connection terminal via a bolt or the like having a male screw.

In the battery pack according to another exemplary embodiment of the present invention, the clinching member is an opened nut including the fixed end that is open-ended, a bolt member is screwed into the opened nut from the fixed end side, such that the bolt member closes an opening at the fixed end and a male screw of the bolt member protrudes from the opened nut, and the male screw of the bolt member serves as an external connection portion of the external output terminal.

According to the above configuration, the clinching member is a through type nut having the fixed end opened, the fixed end is closed by screwing the bolt member into the clinching member from the fixed end side, the male screw of the screwed bolt member serves as a male-type terminal as the external connection portion of the external output terminal, and thus the external connection can be simply and easily performed by connecting a connection terminal via a nut or the like having a female threaded portion.

In the battery pack according to another exemplary embodiment of the present invention, the rubber-like elastic body may be an O-ring, a lateral width of the chamfered portion may be larger than a radius in a cross section of the O-ring, and a depth of the chamfered portion may be smaller than a diameter in the cross section of the O-ring.

According to the above configuration, since the O-ring that is the rubber-like elastic body can reliably elastically deform in a state of being guided to the chamfered portion, the clinching member and the output bus bar can be fixed to the fixed portion while having the waterproof structure reliably.

In the battery pack according to another exemplary embodiment of the present invention, the rubber-like elastic body may be an O-ring, and an area of a chamfered region in a cross section of the chamfered portion may be smaller than a cross-sectional area in a cross section of the O-ring.

According to the above configuration, since the O-ring that is the rubber-like elastic body can be reliably elastically deformed and pressed in a state of being guided to the chamfered portion, the external output terminal and the output bus bar can be fixed to the exterior case while having the waterproof structure reliably.

In the battery pack according to another exemplary embodiment of the present invention, the exterior case may include a recess in a case surface, the external output terminal being disposed in the recess, and a bottom surface of the recess may serve as the fixed portion.

According to the above configuration, since the output bus bar is fixed to the bottom surface of the recess provided in the case surface of the exterior case using the bottom surface as the fixed portion, a coupling portion with the external output terminal can be protected by disposing a coupling portion of the output bus bar inside the case surface.

In the battery pack according to another exemplary embodiment of the present invention, a depth of the recess may be larger than a protruding amount of the external output terminal protruding from the fixed portion.

According to the above configuration, since the depth of the recess provided in the exterior case is made larger than the protruding amount of the external output terminal protruding from the fixed portion, the external output terminal is disposed inside the recess without protruding from the case surface, and a beautiful appearance can be obtained while protecting the external output terminal.

### (First exemplary embodiment)

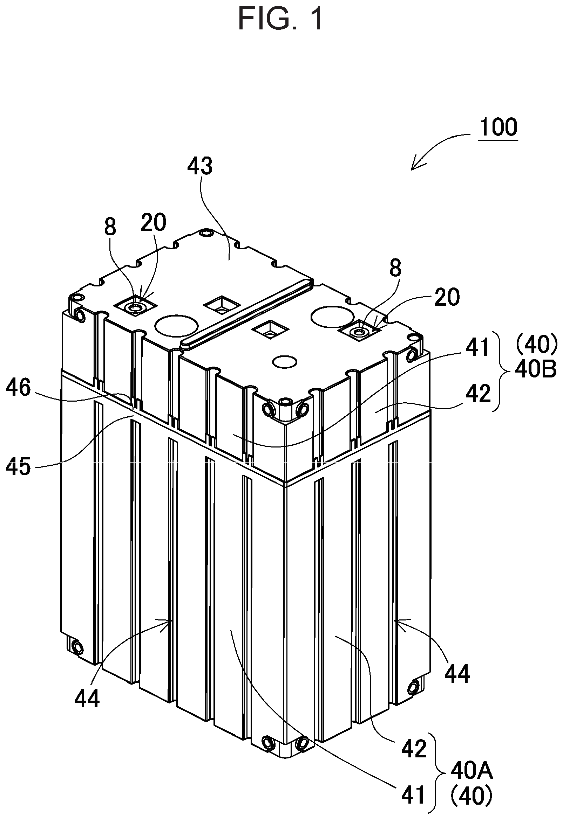

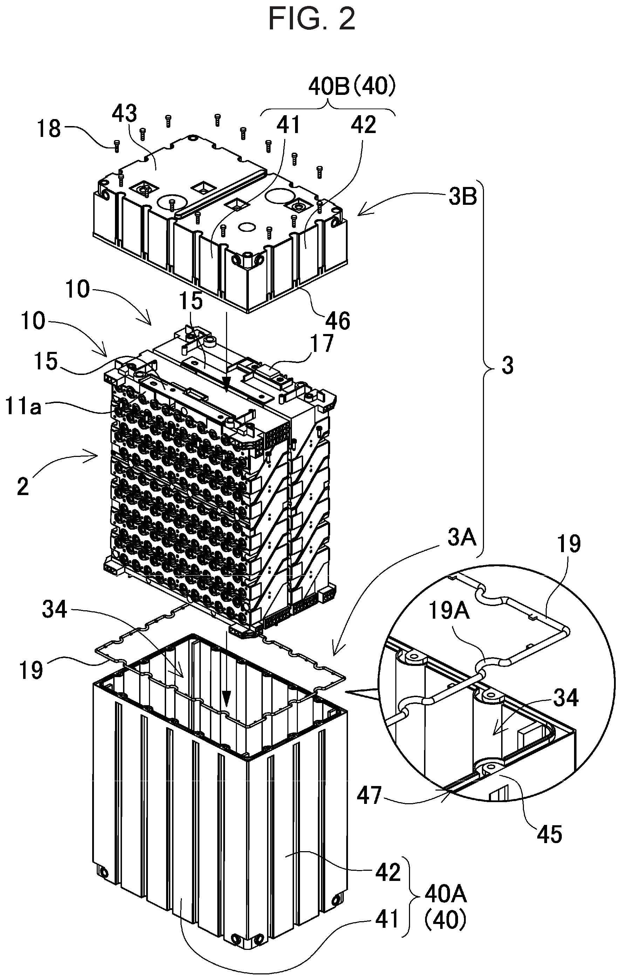

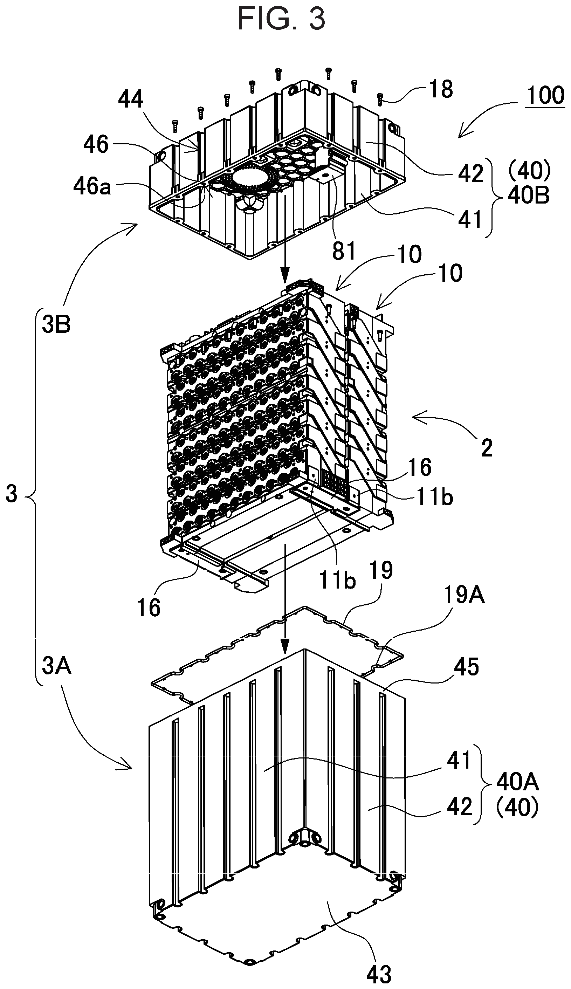

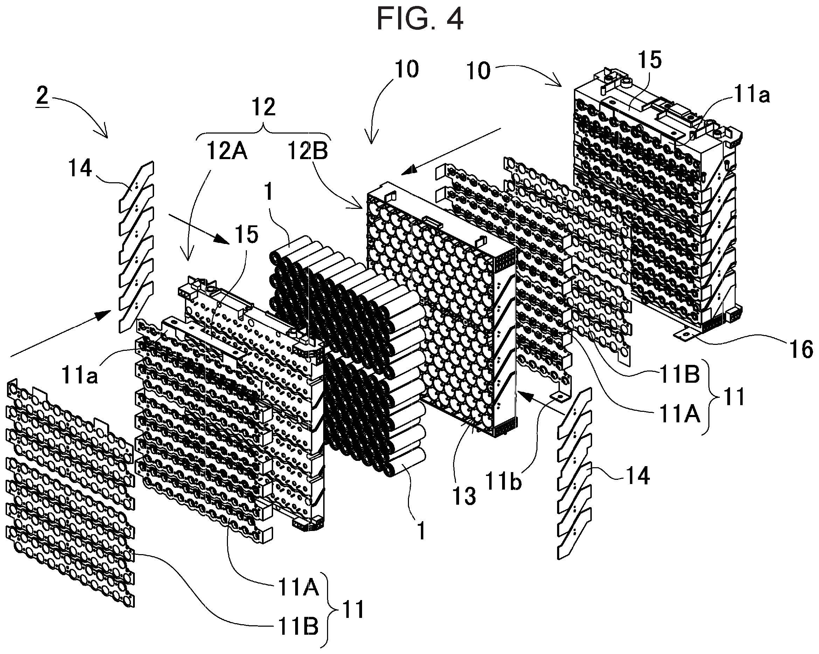

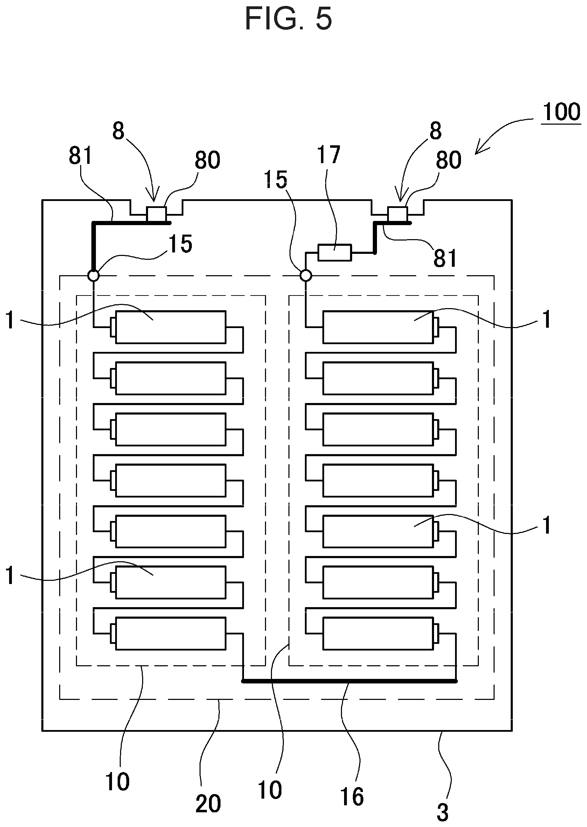

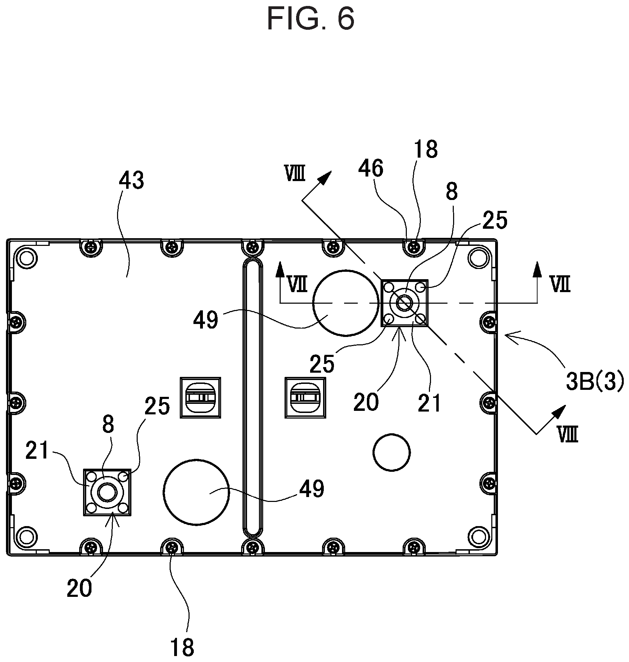

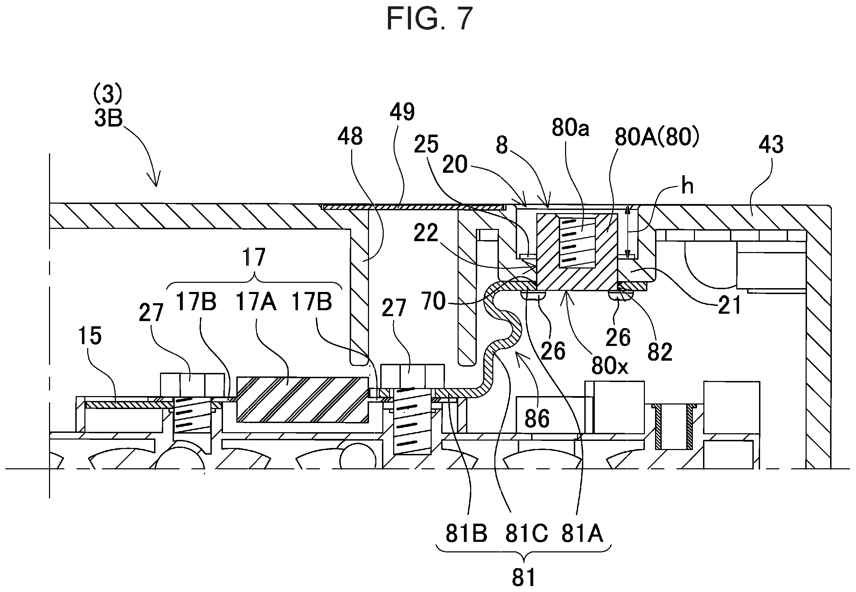

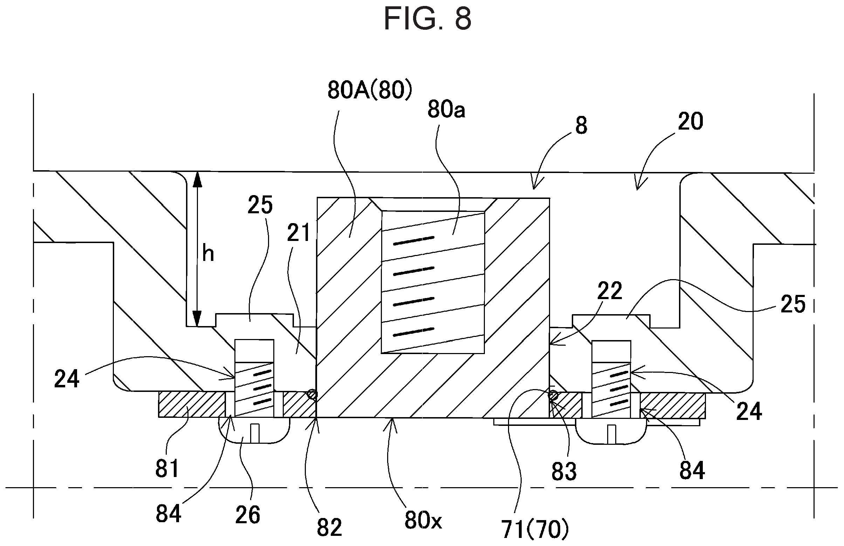

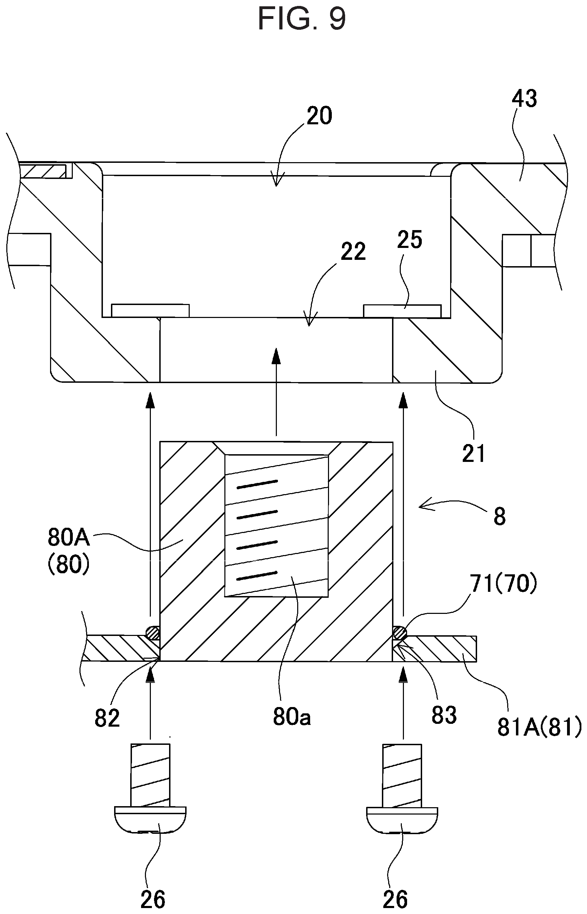

A battery pack according to an exemplary embodiment of the present invention is illustrated in Figs. 1 to 10. In the drawings, Fig. 1 illustrates a perspective view of the battery pack, Fig. 2 illustrates an exploded perspective view of the battery pack illustrated in Fig. 1, Fig. 3 illustrates a rear exploded perspective view of the battery pack illustrated in Fig. 2 as viewed from below, Fig. 4 illustrates an exploded perspective view of the assembled battery, Fig. 5 illustrates a block diagram of the battery pack, Fig. 6 illustrates a plan view of the battery pack, Figs. 7 and 8 respectively illustrate a sectional view taken along line VII-VII and a sectional view taken along line VIII-VIII in Fig. 6, and Fig. 9 illustrates an exploded sectional view of Fig. 7. The battery pack illustrated in the drawings includes assembled battery 2 including a plurality of battery cells 1, exterior case 3 housing assembled battery 2, external output terminal 8 disposed to be exposed from exterior case 3, and output bus bar 81 formed by fixing external output terminal 8 to first end 81A and connecting output terminal 15 of assembled battery 2 to second end 81B.

### (Assembled battery 2)

As illustrated in Figs. 2 to 4, in battery pack 100, the plurality of battery cells 1 are housed as assembled battery 2 in exterior case 3. The plurality of battery cells 1 are assembled in a predetermined array to form battery block 10, and a plurality of battery blocks 10 are connected to form assembled battery 2. In battery pack 100 illustrated in the drawings, two battery blocks 10 are stacked and connected in a front-rear direction in the drawings in a vertically standing posture to form assembled battery 2. In assembled battery 2, two battery blocks 10 stacked front to rear can be connected via a connecting member (not illustrated).

### (Battery cell 1)

Battery cell 1 is a non-aqueous electrolyte secondary battery cell such as a lithium ion battery. However, the present invention does not limit battery cell 1 to the lithium ion battery, and all secondary batteries that are currently used and will be developed, such as other non-aqueous electrolyte secondary batteries and nickel-metal hydride batteries, can be used. Battery cell 1 in Fig. 4 is a cylindrical battery having electrode end surfaces at both ends. However, the battery pack of the present invention does not specify the battery as the cylindrical battery. This is because a chargeable rectangular battery or the like can also be used for battery cell 1. In the cylindrical battery, an electrode and an electrolytic solution are housed in a cylindrical metal case. The metal case has a sealed structure in which a sealing plate is airtightly fixed to an opening of an exterior can having a closed bottom. The exterior can is manufactured by pressing a metal plate. The sealing plate is crimped to a peripheral edge of the opening of the exterior can to be airtightly fixed via a packing that is an insulating material. In the rectangular battery, positive and negative electrode terminals are provided in an insulated manner on a sealing plate that closes an opening of a metal case.

### (Battery block 10)

In battery block 10, the plurality of battery cells 1 are arranged in parallel to each other, and electrode end surfaces of battery cells 1 are arranged on the same plane. In battery block 10, the plurality of battery cells 1 are arranged at fixed positions by plastic battery holder 12. In battery block 10 of Fig. 4, 154 cylindrical batteries are housed in battery holder 12, and 11 battery cells 1 are arranged in one row in one stage. In battery block 10, with each battery cell 1 in a parallel posture, the electrode end surfaces of battery cells 1 are arranged on the same plane, and lead plate 11 is connected to the electrode end surfaces on the same plane.

### (Lead plate 11)

In battery block 10, a plurality of lead plates 11 connect the plurality of battery cells 1 in parallel to each other. Lead plate 11 illustrated in Fig. 4 has a laminated structure of connection lead plate 11A having a connection portion connected to the electrode end surfaces of the plurality of battery cells 1 and energizing lead plate 11B that reduces energizing resistance between battery cells 1 connected in parallel or in series. Connection lead plate 11A is connected to the electrode end surface by a method such as laser welding, spot welding, or ultrasonic welding. Furthermore, in battery block 10, the plurality of battery cells 1 connected in parallel to each other are connected in series via bus bar 14 disposed on a side surface of battery holder 12. In battery block 10 of Fig. 4, 154 battery cells 1 are connected in 22 parallel and 7 series. However, in the battery block, the number and connection state of the plurality of battery cells are not limited to the above. In the battery block, the number and connection state of battery cells to be connected can be variously changed.

### (Battery holder 12)

Battery holder 12 in Fig. 4 has a structure in which the plurality of battery cells 1 are arranged at the fixed positions. In battery holder 12 of Fig. 4, plastic that is the insulating material is molded, and insertion tube portions 13 of the plurality of battery cells 1 are integrally molded and provided. Insertion tube portion 13 holds battery cell 1 set here at the fixed position. In battery holder 12 in the figure, battery cell 1 is the cylindrical battery, and insertion tube portion 13 has a shape in which the cylindrical battery is inserted into insertion tube portion 13 and held at a fixed position. In battery holder 12 in the figure, 154 battery cells 1 are arranged 11 in a row in a left-right direction and in 14 rows in an up-down direction, and are arranged in a Japanese rice bag stacking posture in which battery cells 1 positioned above and below are arranged in valleys of battery cells 1 adjacent to each other on the left and right.

As illustrated in Fig. 4, battery holder 12 is divided into a pair of cell holders 12A and 12B and molded. Each of cell holders 12A and 12B constituting battery holder 12 is provided with insertion tube portion 13 into which battery cell 1 is inserted in a parallel posture. Insertion tube portion 13 has both ends opened to expose the electrode end surfaces of the cylindrical battery to be inserted therein, so that lead plate 11 can be connected to the electrode end surface. Insertion tube portions 13 of cell holders 12A and 12B have a length that allows about half of battery cells 1 to be inserted, and each of battery cells 1 is disposed at a fixed position of battery holder 12 by inserting the half into one cell holder 12A and the remaining half into the other cell holder 12B. Battery holder 12 having the above structure has an advantage that the plurality of battery cells 1 can be reliably held while being arranged at the fixed positions by inserting battery cells 1 into insertion tube portions 13 of cell holders 12A and 12B that are divided into two.

In assembled battery 2 described above, as illustrated in Figs. 2 to 5, two battery blocks 10 arranged front to rear are connected in series. Two battery blocks 10 are connected in series to each other via coupling bus bar 16 disposed on a lower surface in the drawings. Coupling bus bar 16 is connected to output lead part 11b drawn to a lower side of battery block 10 among output lead parts 11a, 11b drawn from lead plate 11 connected to positive and negative output sides of the plurality of battery cells 1 connected in series to each other, and is connected to two battery blocks 10. Furthermore, in assembled battery 2, positive and negative output terminals 15 are arranged on an upper surface in the drawings. Positive and negative output terminals 15 are metal plates laminated on output lead part 11a drawn to an upper side of the battery block. Positive and negative output terminals 15 of assembled battery 2 are connected to external output terminals 8 via output bus bars 81.

Although not illustrated, the battery pack may include a circuit board. The circuit board can be disposed at a fixed position of the exterior case via a substrate holder. The substrate holder can be disposed, for example, between an upper surface of the assembled battery and the exterior case, and the circuit board can be disposed inside the exterior case. The circuit board can be mounted with an electronic component (not illustrated) that is connected to the battery cell and realizes a protection circuit of the battery cell. The protection circuit can be a circuit that prevents overcharge and overdischarge of the battery cell, a circuit that prevents overcurrent, or a circuit that interrupts current in a state where temperature rises abnormally.

### (Exterior case 3)

Exterior case 3 has a rectangular parallelepiped box outer shape. Exterior case 3 is made of a member having excellent insulation properties, for example, a resin such as polycarbonate or a PC-ABS alloy. Exterior case 3 illustrated in Figs. 2 and 3 is divided into two parts of body case 3A and lid case 3B at an upper and lower intermediate portion. Body case 3A and lid case 3B have a container shape in which main surface plate 41 and side surface plate 42 are provided as peripheral wall 40 around end surface plate 43, and form housing portion 34 capable of housing assembled battery 2 therein. Body case 3A and lid case 3B have different heights of peripheral walls 40A, 40B connected to end surface plate 43, thereby forming body case 3A deeper than lid case 3B. Body case 3A and lid case 3B are formed in a tubular shape by connecting main surface plate 41 and side surface plate 42 at both side edges, and are formed in a deep container shape by connecting end surface plate 43 to one end surface and making the other end surface an opening.

In exterior case 3 illustrated in Figs. 1 to 3, a plurality of rows of grooves 44 are formed and provided on surfaces of main surface plate 41 and side surface plate 42 which are peripheral wall 40. The plurality of grooves 44 are provided to extend in a height direction of peripheral wall 40 in a posture parallel to each other. Exterior case 3 in the drawings is provided with grooves 44 over entire peripheral wall 40, and heat dissipation characteristics of exterior case 3 are improved by reducing a weight of entire exterior case 3 and increasing a surface area. Body case 3A and lid case 3B are provided with the plurality of rows of grooves 44 from end surface plate 43 toward the opening, and grooves 44 are not provided in the opening edge portion, but flange portions 45, 46 are provided along the opening edge. Body case 3A and lid case 3B are connected to each other by connecting flange portions 45, 46 facing each other via set screws 18. As illustrated in Fig. 3, in lid case 3B, insertion holes 46a through which set screws 18 are inserted are provided in flange portion 46, and body case 3A has flange portion 45 as a boss portion into which set screw 18 is screwed.

Body case 3A and lid case 3B are connected to each other with the waterproof structure via packing member 19 at the opening edges facing each other. Packing member 19 illustrated in Fig. 2 is a rubber packing having a substantially rectangular shape in plan view along opening end surfaces of body case 3A and lid case 3B and having a predetermined thickness, and is disposed along longitudinal groove 47 provided in the opening end surface of body case 3A. Since body case 3A and lid case 3B are connected by set screw 18 at positions facing grooves 44 provided in peripheral wall 40, packing member 19 of Fig. 2 is provided with bypass portions 19A detouring inward in a U-shape at positions facing grooves 44, that is, at positions where set screws 18 are inserted. Thus, set screws 18 can be screwed outside packing member 19, thereby preventing water from entering screwed portions. Body case 3A and lid case 3B are connected in a watertight structure by screwing set screws 18 inserted through insertion holes 46a of flange portion 46 of lid case 3B into flange portion 45 of body case 3A in a state where packing member 19 is disposed in longitudinal groove 47 of the opening end surface of body case 3A and sandwiched with the opening end surface of lid case 3B. Short grooves 44 formed in lid case 3B are also used as a tool gap for guiding a screwdriver when set screws 18 are screwed.

### (Recess 20)

Exterior case 3 is provided to expose external output terminals 8 for outputting positive and negative outputs of built-in assembled battery 2 to an outside. Exterior case 3 illustrated in Fig. 1 is disposed in a state where external output terminals 8 are exposed on an upper surface of lid case 3B. Exterior case 3 is provided with recesses 20 having a shape recessed inward from the case surface, and external output terminals 8 are arranged inside recesses 20. As illustrated in Figs. 1, 6, and 7, recess 20 has a quadrangular prism shape and has depth (h) at which external output terminal 8 protruding from the bottom surface can be completely housed. That is, recess 20 is formed so that depth (h) is larger than the protruding amount of the external output terminal 8 disposed to protrude from the bottom surface. This structure can have a neat and beautiful appearance without allowing external output terminal 8 to protrude from the case surface. In addition, there is also an advantage that external output terminal 8 can be protected by housing external output terminal 8 inside recess 20. However, the exterior case does not necessarily have to be provided with the recess on the case surface, where the external output terminal is disposed, and the external output terminal can also be provided to be fixed to the surface plate forming the case surface. External output terminal 8 is fixed to exterior case 3 with the waterproof structure. Hereinafter, the waterproof structure of this portion will be described in detail.

### (Fixed portion 21)

In exterior case 3, a part of the surface plate is fixed portion 21 to which external output terminal 8 is fixed. In exterior case 3 illustrated in Figs. 7 to 9, the bottom surface of recess 20 is fixed portion 21 to which external output terminal 8 is fixed. Fixed portion 21 is provided with terminal insertion opening 22 opened, so that cylindrical clinching member 80 that is external output terminal 8 is disposed to pass through terminal insertion opening 22. Terminal insertion opening 22 has a circular shape along the outer shape of clinching member 80, and an inner diameter of terminal insertion opening 22 is substantially equal to or slightly larger than an outer diameter of clinching member 80. However, when the inner diameter of terminal insertion opening 22 is too large, a gap between the opening edge of terminal insertion opening 22 and the outer peripheral surface of clinching member 80 is large, and it is difficult to perform waterproofing. Therefore, the gap between the opening edge of terminal insertion opening 22 and the outer peripheral surface of clinching member 80 is preferably 1 mm or less, and more preferably 0.1 mm or less.

In order to fix output bus bar 81 to a lower surface side of fixed portion 21, fixed portion 21 is provided with female threaded hole 24 into which fixing screw 26 passing through output bus bar 81 is screwed. In female threaded hole 24, an insertion port of fixing screw 26 is opened in the lower surface of fixed portion 21, and protruding portion 25 protruding from an upper surface of fixed portion 21 is provided so that fixing screw 26 screwed into fixed portion 21 can be deeply screwed and tightened without allowing fixing screw 26 to pass through fixed portion 21, to form female threaded hole 24 deeply. Female threaded holes 24 are provided at equal intervals at four locations around terminal insertion opening 22.

### (External output terminal 8)

External output terminal 8 is formed of clinching member 80 having a cylindrical outer shape. In the present specification, clinching member 80 refers to a member fixed by press-fitting one end into a through-hole provided in a metal plate, and examples thereof include a nut called a clinching nut or a clinching spacer. However, in the present invention, clinching member 80 is not specified as described above, and can be another member that can be press-fitted and fixed to output bus bar 81. Although a shape and a fixing method of the clinching member vary depending on a manufacturer, in the present invention, regardless of these specifications, the clinching member that is generally used is fixed to the exterior case with the waterproof structure while being used as the external output terminal.

Cylindrical clinching member 80 is vertically fixed to connection opening 82 opened in output bus bar 81. Furthermore, clinching member 80 has fixed end 80x fixed to output bus bar 81 closed. Clinching member 80 illustrated in the drawings is a nut having a cylindrical outer shape, and is bottomed nut 80A that closes fixed end 80x fixed to output bus bar 81. As such a clinching member, for example, a blind type clinching nut can be used. Clinching member 80 is made of stainless steel, and can be manufactured, for example, by SUS304. However, the clinching member may be made of metal other than stainless steel. Metal clinching member 80 is press-fitted and fixed to connection opening 82 opened in metal output bus bar 81. In external output terminal 8 having the above structure, since clinching member 80 is bottomed nut 80A in which fixed end 80x is closed, female threaded portion 80a of nut 80A is used as the external connection portion of external output terminal 8. External output terminal 8 having this shape is connected, as a female-type terminal, to a connection line externally connected via the bolt or the like having a male screw.

### (Output bus bar 81)

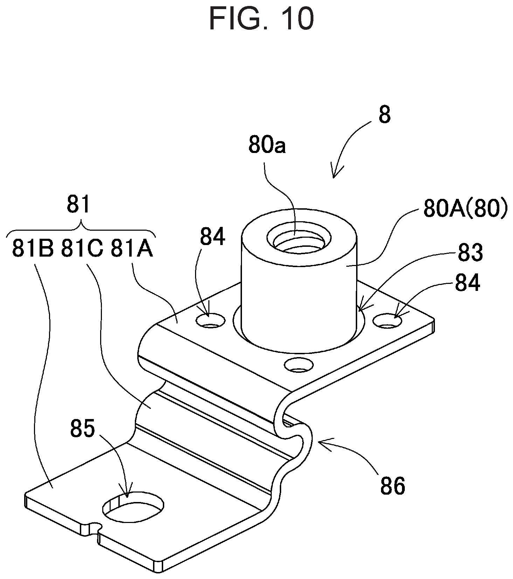

As illustrated in Fig. 7, output bus bar 81 is disposed inside exterior case 3, and connects output terminal 15 of assembled battery 2 to external output terminal 8. Output bus bar 81 is a conductive metal plate having a predetermined thickness, for example, a thickness of 1 to 2 mm, fixes external output terminal 8 to first end 81A that is one end, and connects second end 81B that is the other end to output terminal 15 of assembled battery 2. As such a metal plate, for example, a nickel-plated aluminum plate or a copper plate can be used. In output bus bar 81 illustrated in Figs. 7 and 10, first end 81A and second end 81B are bent in opposite directions with respect to intermediate portion 81C to form an overall shape into a crank shape. Output bus bar 81 has an advantage that first end 81A and second end 81B bent in the opposite directions are coupled via intermediate portion 81C, so that first end 81A and second end 81B can be connected while being vertically separated from each other. Furthermore, in output bus bar 81 illustrated in the drawings, a U-curved portion is provided in intermediate portion 81C to form elastic deformation portion 86. This elastic deformation portion 86 has an advantage of being able to absorb a tolerance and a positional deviation between first end 81A fixed to an inner surface of lid case 3B and second end 81B connected to output terminal 15 of assembled battery 2 by elastic deformation. However, the elastic deformation portion can have a structure different from that of the U-curved portion.

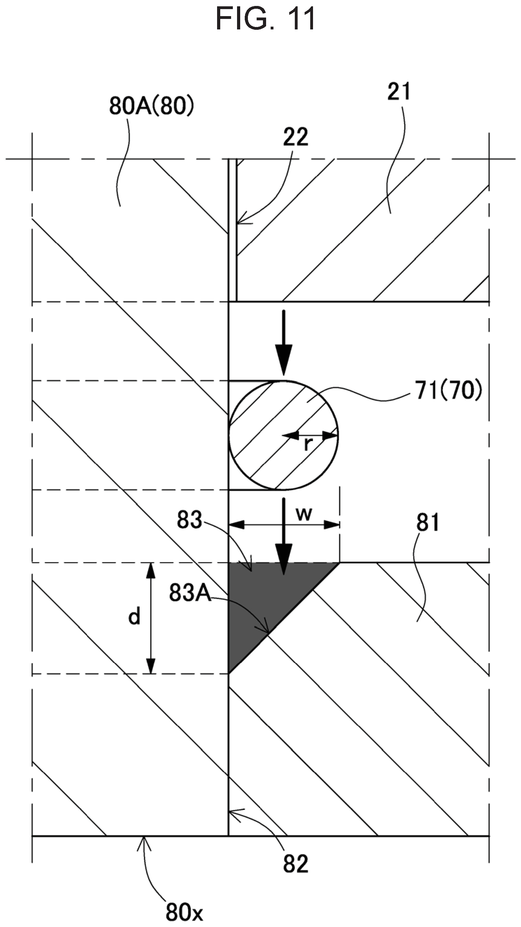

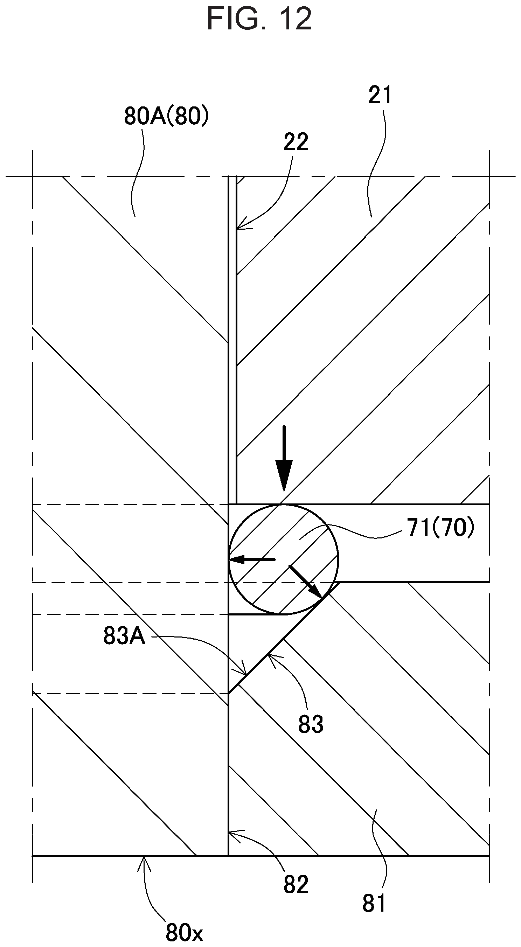

As illustrated in Figs. 7 to 9, in output bus bar 81, first end 81A to which clinching member 80 is fixed is provided with connection opening 82 for press-fitting clinching member 80 opened. Connection opening 82 is opened to an inner diameter capable of press-fitting fixed end 80x of clinching member 80. Furthermore, output bus bar 81 illustrated in Figs. 10 to 13 is provided with chamfered portion 83 by chamfering the opening edge portion of connection opening 82 along the opening edge in a surface facing fixed portion 21. Chamfered portion 83 is cut off by providing inclined surface 83A, and a cross-sectional shape of a region (indicated by gray hatching in Fig. 11) chamfered in a cross section of chamfered portion 83 is a substantially triangular shape. In this manner, as illustrated in Figs. 11 and 12, chamfered portion 83 formed at the opening edge portion of connection opening 82 is a portion for positioning annular rubber-like elastic body 70 sandwiched between output bus bar 81 and fixed portion 21. In this manner, a structure in which chamfered portion 83 is provided at the opening edge portion of connection opening 82 opened in output bus bar 81 is advantageous because chamfered portion 83 serving as a positioning portion of annular rubber-like elastic body 70 can be provided while removing metal burrs generated at the opening edge in a process of opening connection opening 82 in the metal plate.

As illustrated in Fig. 10, in output bus bar 81, insertion holes 84 through which fixing screws 26 for fixing first end 81A to which clinching member 80 is fixed to fixed portion 21 pass are provided to be opened around connection opening 82. These insertion holes 84 are provided at equal intervals at positions facing female threaded holes 24 provided in fixed portion 21, that is, at four locations around connection opening 82.

In output bus bar 81, connection hole 85 through which connection bolt 27 for connecting to output terminal 15 of assembled battery 2 is inserted is provided to be opened in second end 81B. Fig. 7 illustrates output bus bar 81 connected to output terminal 15 on the negative electrode side of assembled battery 2, and this output bus bar 81 is connected to output terminal 15 of assembled battery 2 via current interrupting element 17. As illustrated in Fig. 10, connection hole 85 is formed as a long hole to allow positional displacement of a connection portion.

### (Rubber-like elastic body 70)

In order to fix output bus bar 81, to which clinching member 80 is fixed, to fixed portion 21 in a watertight structure, annular rubber-like elastic body 70 is disposed along the outer peripheral surface of clinching member 80 between output bus bar 81 and fixed portion 21. As such rubber-like elastic body 70, for example, O-ring 71 made of silicone rubber or nitrile rubber can be used. As illustrated in Fig. 12, when output bus bar 81 is fixed to fixed portion 21 in a state of being disposed outside clinching member 80, rubber-like elastic body 70 that is O-ring 71 is sandwiched between output bus bar 81 and fixed portion 21 and elastically deformed to seal clinching member 80 with respect to terminal insertion opening 22 of fixed portion 21 in a watertight structure.

At this time, O-ring 71 is elastically deformed by being pressed against the opening edge portion of terminal insertion opening 22 of fixed portion 21 in a state of being positioned by chamfered portion 83 provided at the opening edge portion of connection opening 82 of output bus bar 81 and being disposed at a fixed position. In this manner, O-ring 71 disposed in chamfered portion 83 of connection opening 82 is pressed toward the outer peripheral surface of clinching member 80 by being crushed along inclined surface 83A of chamfered portion 83, thereby performing sealing in an ideal state. This is because, when O-ring 71 pressed by fixed portion 21 presses inclined surface 83A of chamfered portion 83, a force that presses the outer peripheral surface of clinching member 80 in an inward direction acts due to a reaction received from inclined surface 83A. In this manner, rubber-like elastic body 70 that is O-ring 71 is elastically deformed in a state of being pressed against the opening edge portion of terminal insertion opening 22 of fixed portion 21, inclined surface 83A of chamfered portion 83, and the outer peripheral surface of clinching member 80, and thus these members are ideally sealed and connected in a watertight structure.

As described above, in order to perform sealing by ideally elastically deforming O-ring 71, preferably, chamfered portion 83 has lateral width (w) larger than radius (r) in the cross section of O-ring 71, and depth (d) smaller than diameter (2r) in the cross section of O-ring 71. For example, chamfered portion 83 can have lateral width (w) of r ≤ w ≤ 2r and depth (d) of r ≤ d ≤ 2r. With chamfered portion 83 having the above shape, O-ring 71 pressed by the opening edge portion of terminal insertion opening 22 of fixed portion 21 can be appropriately elastically deformed along chamfered portion 83 while being reliably guided and positioned inside chamfered portion 83, to reliably press the outer peripheral surface of clinching member 80.

In chamfered portion 83 formed as described above, a chamfered cut surface can be inclined surface 83A. However, in the chamfered portion, the chamfered cut surface may be a curved surface that is a protruding surface or a recessed surface. Furthermore, as illustrated in the enlarged sectional view of Fig. 11, chamfered portion 83 is set such that the area of the chamfered region (indicated by gray hatching in the figure) in the cross section of chamfered portion 83 is smaller than a cross-sectional area in the cross section of O-ring 71 when it is not elastically deformed. Thus, O-ring 71 pressed against chamfered portion 83 of output bus bar 81, the outer peripheral surface of clinching member 80, and the opening edge portion of terminal insertion opening 22 of fixed portion 21 can be elastically deformed in a state of being pressed against each of contact surfaces, and each of contact portions can be reliably sealed.

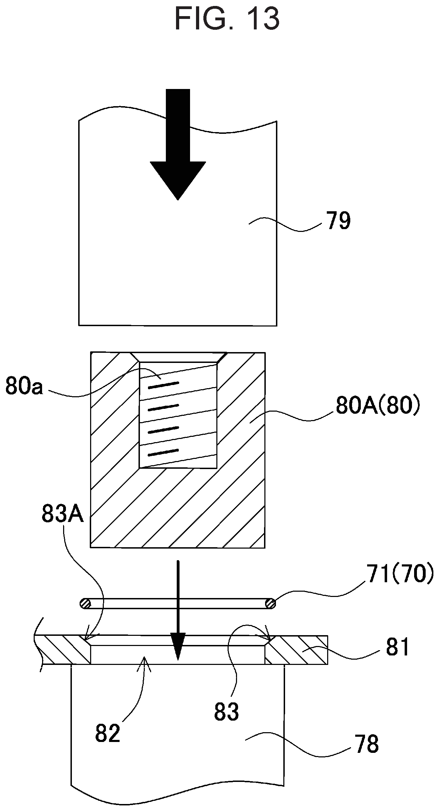

As illustrated in Fig. 11, O-ring 71 disposed in chamfered portion 83 of connection opening 82 can be disposed in chamfered portion 83 by inserting O-ring 71 into clinching member 80 after fixing clinching member 80 to connection opening 82 of output bus bar 81. However, as illustrated in Fig. 13, O-ring can also be disposed in chamfered portion 83 in a step of press-fitting clinching member 80 into connection opening 82 of output bus bar 81. Fig. 13 illustrates a step in which O-ring 71 is disposed in chamfered portion 83 in a state where output bus bar 81 is placed on support base 78 that is a jig, and then clinching member 80 is press-fitted into connection opening 82 by being pressed by pressing portion 79 in a state where clinching member 80 is inserted inside O-ring 71. According to this method, in the step of press-fitting clinching member 80 into connection opening 82, O-ring 71 can also be sandwiched between the outer peripheral surface of clinching member 80 and inclined surface 83A of chamfered portion 83 in a state where O-ring 71 disposed in advance in chamfered portion 83 is wound between them, to be disposed at the fixed position. In output bus bar 81, the O-ring is also fixed at the fixed position in a state where clinching member 80 is press-fitted and fixed to connection opening 82. Note that in an illustrated example, O-ring 71 is used as annular rubber-like elastic body 70, but not limited to the O-ring, a rubber-like elastic body having a cross section of triangular, polygonal, or the like, having a similar shape slightly larger than a sectional shape of chamfered portion 83 can be used.

In battery pack 100 described above, external output terminal 8 is fixed to exterior case 3 with the waterproof structure in the following steps.
(1) Connection opening 82 is opened at a fixed position of first end 81A of output bus bar 81. The connection opening is opened by punching or the like.
(2) The opening edge portion of connection opening 82 opened in output bus bar 81 is chamfered to provide chamfered portion 83. This step can also serve as a step of removing the metal burrs generated at the opening edge when connection opening 82 is opened.
(3) Clinching member 80 is press-fitted and fixed to connection opening 82 of output bus bar 81. Clinching member 80 is vertically fixed with respect to output bus bar 81. In this step, as illustrated in Fig. 13, O-ring 71 can also be fixed at a fixed position of chamfered portion 83.
(4) As illustrated in Fig. 9, O-ring 71 is inserted into clinching member 80 fixed to output bus bar 81 and disposed in chamfered portion 83.
(5) As illustrated in Fig. 9, while clinching member 80 is guided to terminal insertion opening 22 opened in fixed portion 21 of exterior case 3, output bus bar 81 is disposed on the lower surface of fixed portion 21.
(6) Output bus bar 81 disposed on the lower surface of fixed portion 21 is fixed to fixed portion 21 via fixing screw 26. Fixing screw 26 is screwed into female threaded hole 24 of fixed portion 21 in a state of passing through insertion hole 84 of output bus bar 81, thereby fixing output bus bar 81 to the lower surface of fixed portion 21.
(7) In this state, as illustrated in Fig. 12, O-ring disposed in chamfered portion 83 is elastically deformed by being sandwiched and pressed by output bus bar 81 and fixed portion 21 that relatively approach each other, and performs sealing in a state of being in close contact with chamfered portion 83 of output bus bar 81, the opening edge portion of terminal insertion opening 22 of fixed portion 21, and the outer peripheral surface of clinching member 80.

As described above, output bus bar 81 is fixed at a fixed position inside lid case 3B. Thereafter, lid case 3B is coupled to body case 3A and fixed via set screw 18, and then second end 81B of output bus bar 81 is connected to output terminal 15 of assembled battery 2. In a step of connecting output bus bar 81 to output terminal 15, in Fig. 7, connection bolt 27 is inserted and screwed through opening tubular portion 48 that is integrally molded with end surface plate 43 of lid case 3B and opened in the case surface. After output bus bar 81 is connected to output terminal 15 via connection bolt 27, an opening of opening tubular portion 48 is water-tightly closed by closing material 49.

Note that in exterior case 3 illustrated in Figs. 1, 2, and 6, in order to expose positive and negative external output terminals 8, recesses 20 are provided at two places of lid case 3B, and positive and negative external output terminals 8 are arranged. Positive and negative external output terminals 8 are basically fixed with the same structure, but external output terminal 8 on the positive electrode side and external output terminal 8 on the negative electrode side have different sizes of diameter of clinching member 80. Thus, a user can correctly connect positive and negative external output terminals 8 without erroneous connection. In battery pack 100 illustrated in Fig. 6, external output terminal 8 on the positive electrode side (illustrated on the lower left in Fig. 6) connected to output terminal 15 on the positive electrode side of assembled battery 2 is a nut having an inner diameter of 12 mm, and external output terminal 8 on the negative electrode side (illustrated on the upper right in Fig. 6) connected to output terminal 15 on the negative electrode side of assembled battery 2 is a nut having an inner diameter of 8 mm.

Current interrupting element 17 is connected between external output terminal 8 on the negative electrode side and output terminal 15 of assembled battery 2. Current interrupting element 17 illustrated in Figs. 2 and 7 is a fuse, and is configured to be fused to interrupt a current in a state where an overcurrent flows through assembled battery 2. However, as the current interrupting element, a breaker or the like can be used instead of the fuse. Current interrupting element 17 of Fig. 7 includes lead parts 17B on both sides of element body 17A, and one lead part 17B is connected to second end 81B of output bus bar 81 via connection bolt 27, and the other lead part 17B is connected to output terminal 15 of assembled battery 2 via connection bolt 27.

### (Another example of waterproof structure)

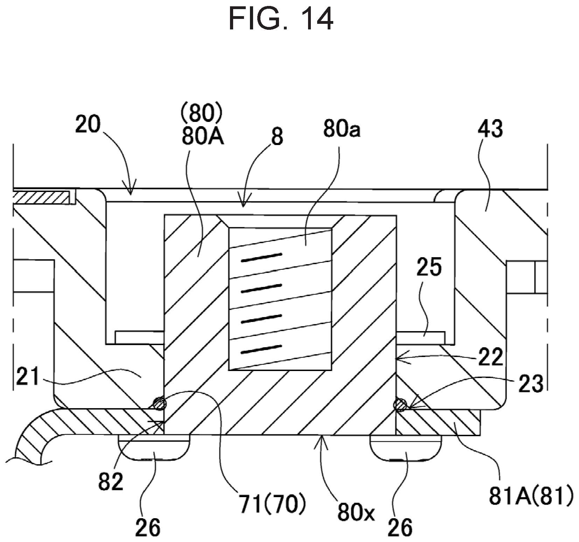

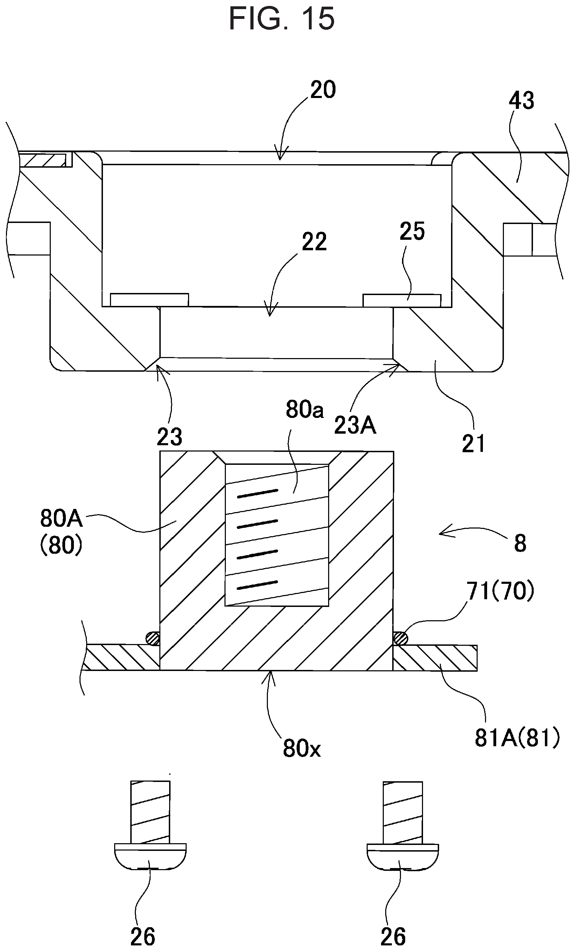

In the above waterproof structure, chamfered portion 83 is provided by chamfering the opening edge portion of connection opening 82 opened in output bus bar 81, but the chamfered portion can also be provided by chamfering the opening edge of the terminal insertion opening opened and provided in fixed portion 21. The waterproof structure is illustrated in Figs. 14 and 15. In the waterproof structure illustrated in the drawings, the chamfered portion is not provided at the opening edge portion of connection opening 82 of output bus bar 81 to which clinching member 80 is fixed, and the chamfered portion is provided at the opening edge portion of terminal insertion opening 22 opened in fixed portion 21. Fixed portion 21 illustrated in the drawings is provided with chamfered portion 23 by chamfering the opening edge portion of terminal insertion opening 22 along the opening edge in a surface facing output bus bar 81. Chamfered portion 23 is cut off by providing inclined surface 23A, and its dimension and shape can be similar to those of chamfered portion 83 provided in the output bus bar described above.

Also in the above waterproof structure, O-ring 71 is elastically deformed by being pressed by output bus bar 81 in a state of being positioned by chamfered portion 23 provided at the opening edge portion of terminal insertion opening 22 of fixed portion 21 and being disposed at the fixed position. In this manner, O-ring 71 disposed in chamfered portion 23 of terminal insertion opening 22 is pressed toward the outer peripheral surface of clinching member 80 by being crushed along inclined surface 23A of chamfered portion 23, thereby performing sealing in an ideal state. This is because, when O-ring 71 pressed by output bus bar 81 presses inclined surface 23A of chamfered portion 23, the force that presses the outer peripheral surface of clinching member 80 in the inward direction acts due to a reaction received from inclined surface 23A. Also in this waterproof structure, rubber-like elastic body 70 that is O-ring 71 is elastically deformed in a state of being pressed against chamfered portion 23 provided at the opening edge portion of terminal insertion opening 22 of fixed portion 21, output bus bar 81, and the outer peripheral surface of clinching member 80, and thus these members are ideally sealed and connected in a watertight structure. Furthermore, in the battery pack of the present invention, chamfered portions can also be provided on both the output bus bar and the fixed portion.

### (Another example of external output terminal)

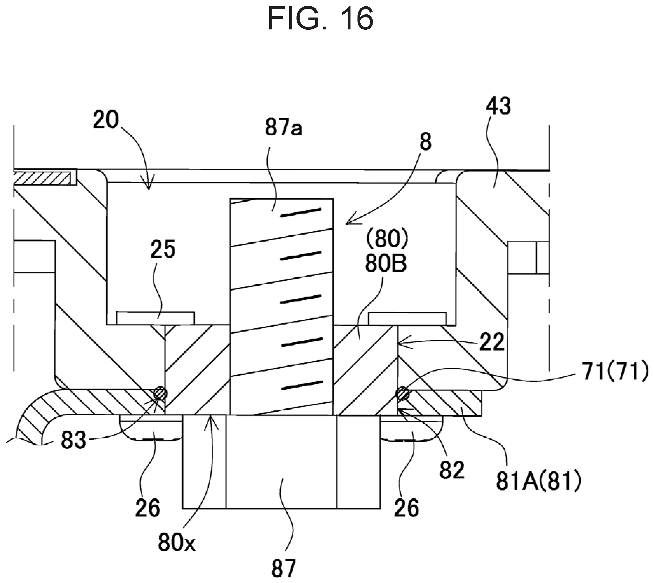

External output terminal 8 described above is constituted by clinching member 80 that is bottomed nut 80A, and female threaded portion 80a provided on an inner surface of nut 80A is used as the external connection portion of external output terminal 8. Furthermore, in the present invention, the external output terminal can have a structure illustrated in Fig. 16.

In external output terminal 8 illustrated in Fig. 16, clinching member 80 is nut 80B having fixed end 80x opened, bolt member 87 is screwed into this nut 80B from fixed end 80x side to close fixed end 80x with a head of bolt member 87, and male screw 87a of bolt member 87 protrudes from nut 80B, and thus this male screw 87a is used as the external connection portion. In external output terminal 8 having this structure, clinching member 80 is a through type nut 80B having fixed end 80x opened, and male screw 87a is used as the external connection portion of external output terminal 8 by screwing bolt member 87 into nut 80B from fixed end 80x side. External output terminal 8 having this shape is connected, as a male-type terminal, to a line externally connected via the nut or the like having a female threaded portion.

A step of screwing bolt member 87 from fixed end 80x side to nut 80B having fixed end 80x opened is preferably a pre-step of fixing nut 80B to fixed portion 21 in consideration of a load on O-ring. Furthermore, in a step of screwing and fixing bolt member 87 to nut 80B, opened fixed end 80x of nut 80B can be reliably sealed with bolt member 87 by preferably using a sealing material such as a sealing tape. In the structure illustrated in Fig. 16, chamfered portion 83 for positioning O-ring 71 is provided at the opening edge portion of connection opening 82 of output bus bar 81, but may be provided at the opening edge portion of terminal insertion opening 22 of fixed portion 21 as described above.

### INDUSTRIAL APPLICABILITY

The present invention is a battery pack used as a power source for an electric vehicle or a power source for an electric heavy machine, a forklift, or the like, and particularly can be effectively used for a battery pack in which a large number of battery cells are housed in the exterior case.

### REFERENCE MARKS IN THE DRAWINGS

100: battery pack
1: battery cell
2: assembled battery
3: exterior case
3A: body case
3B: lid case
8: external output terminal
10: battery block
11: lead plate
11A: connection lead plate
11B: energizing lead plate
11a: output lead part
11b: output lead part
12: battery holder
12A, 12B: cell holder
13: insertion tube portion
14: bus bar
15: output terminal
16: coupling bus bar
17: current interrupting element
17A: element body
17B: lead part
18: set screw
19: packing member
19A: bypass portion
20: recess
21: fixed portion
22: terminal insertion opening
23: chamfered portion
23A: inclined surface
24: female threaded hole
25: protruding portion
26: fixing screw
27: connection bolt
34: housing portion
40, 40A, 40B: peripheral wall
41: main surface plate
42: side surface plate
43: end surface plate
44: groove
45: flange portion
46: flange portion
46a: insertion hole
47: longitudinal groove
48: opening tubular portion
49: closing material
70: rubber-like elastic body
71: O-ring
78: support base
79: pressing portion
80: clinching member
80A, 80B: nut
80a: female threaded portion
81: output bus bar
81A: first end
81B: second end
82: connection opening
83: chamfered portion
83A: inclined surface
84: insertion hole
85: connection hole
86: elastic deformation portion
87: bolt member
87a: male screw
91: output bus bar
92: connection opening
93: exterior case
94: through-hole
95: clinching nut
96: outer peripheral groove
97: O-ring
98: fixing screw

## Claims

1. A battery pack comprising:
an assembled battery including a plurality of battery cells;
an exterior case housing the assembled battery;
an external output terminal disposed to be exposed from the exterior case; and
an output bus bar including a first end, to which the external output terminal is fixed, and a second end, to which an output terminal of the assembled battery is connected, wherein
the external output terminal is constituted by a clinching member having a cylindrical outer shape,
the output bus bar has a connection opening at the first end, into which a fixed end of the clinching member is press-fitted such that the clinching member is fixed upright, the fixed end of the clinching member being closed-ended,
the exterior case includes a surface plate, a part of which is a fixed portion having a terminal insertion opening, the external output terminal being fixed to the fixed portion, the clinching member passing through the terminal insertion opening,
a chamfered portion is provided along at least one of an opening edge portion of the connection opening and an opening edge portion of the terminal insertion opening, which face each other,
an annular rubber-like elastic body, through which the clinching member is inserted, is further disposed at a boundary between the opening edge portion of the connection opening of the output bus bar and the clinching member, and
in a state in which the clinching member is inserted into the terminal insertion opening and the output bus bar fixed to the fixed portion, the rubber-like elastic body elastically deforms and seals between the opening edge portion of the connection opening, the opening edge portion of the terminal insertion opening, and an outer peripheral surface of the clinching member, such that the external output terminal is fixed to the exterior case in a waterproof structure.

2. The battery pack according to claim 1, wherein
the clinching member is a bottomed nut including the fixed end that is closed-ended, and
a female threaded portion of the bottomed nut serves as an external connection portion of the external output terminal.

3. The battery pack according to claim 1, wherein
the clinching member is an opened nut including the fixed end that is open-ended,
a bolt member is screwed into the opened nut from the fixed end side, such that the bolt member closes an opening at the fixed end and a male screw of the bolt member protrudes from the opened nut, and
the male screw of the bolt member serves as an external connection portion of the external output terminal.

4. The battery pack according to any one of claims 1 to 3, wherein
the rubber-like elastic body is an O-ring,
a lateral width of the chamfered portion is larger than a radius in a cross section of the O-ring, and
a depth of the chamfered portion is smaller than a diameter in the cross section of the O-ring.

5. The battery pack according to any one of claims 1 to 3, wherein
the rubber-like elastic body is an O-ring, and
an area of a chamfered region in a cross section of the chamfered portion is smaller than a cross-sectional area in a cross section of the O-ring.

6. The battery pack according to claim 1, wherein
the exterior case includes a recess in a case surface, the external output terminal being disposed in the recess, and
a bottom surface of the recess serves as the fixed portion.

7. The battery pack according to claim 6, wherein
a depth of the recess is larger than a protruding amount of the external output terminal protruding from the fixed portion.

8. A battery pack comprising:
an assembled battery including a plurality of battery cells;
an exterior case housing the assembled battery;
an external output terminal disposed to be exposed from the exterior case; and
an output bus bar including a first end, to which the external output terminal is fixed, and a second end, to which an output terminal of the assembled battery is connected, wherein
the external output terminal is a clinching member having a cylindrical outer shape,
the output bus bar has a connection opening at the first end, into which a fixed end of the clinching member is press-fitted, such that the clinching member is fixed upright, the fixed end of the clinching member being closed-ended,
the exterior case includes a case surface, a part of which is a fixed portion having a terminal insertion opening, the external output terminal being fixed to the fixed portion, the clinching member passing through the terminal insertion opening,
a chamfered portion is provided along at least one of an opening edge portion of the connection opening and an opening edge portion of the terminal insertion opening, which face each other,
an annular rubber-like elastic body, through which the clinching member is inserted, is further disposed around a boundary among the opening edge portion of the connection opening of the output bus bar, an opening edge portion of the terminal insertion opening, and the clinching member,
in a state in which the clinching member is inserted into the terminal insertion opening and the output bus bar fixed to the fixed portion, the battery pack is sealed via the rubber-like elastic body that elastically deforms between the opening edge portion of the connection opening, the opening edge portion of the terminal insertion opening, and an outer peripheral surface of the clinching member.

9. The battery pack according to claim 8, wherein
the clinching member is a bottomed nut including the fixed end that is closed-ended, and
a female thread of the bottomed nut serves as a female-type terminal of the external output terminal.

10. The battery pack according to claim 8, wherein
the clinching member is an opened nut including the fixed end that is open-ended,
a head of a bolt threadedly engaged with the opened nut closes an opening at the fixed end,
a male screw of the bolt protrudes from the opened nut, and
the male screw of the bolt serves as a male-type terminal of the external output terminal.

11. The battery pack according to any one of claims 8 to 10, wherein
a cross-sectional shape of a chamfered region in a cross section of the chamfered portion is substantially triangular,
the rubber-like elastic body is an O-ring,
a lateral width of the chamfered portion in the cross section is larger than a radius in a cross section of the O-ring, and
a depth of the chamfered portion is smaller than a diameter in the cross section of the O-ring.

12. The battery pack according to any one of claims 8 to 11, wherein
the rubber-like elastic body is an O-ring, and
a cross-sectional area in a cross section of the O-ring is larger than an area of a chamfered region in the cross section of the chamfered portion.

13. The battery pack according to claim 8, wherein
the exterior case includes a recess in the case surface, and
the external output terminal is disposed in the recess, and the fixed portion is a bottom surface of the recess.

14. The battery pack according to claim 13, wherein
a depth of the recess is larger than a protruding amount of the external output terminal protruding from the fixed portion.
